(19) Europäisches Patentamt
European Patent Office
Office européen des brevets

(11) **EP 3 168 054 B1**

(12) **EUROPEAN PATENT SPECIFICATION**

(45) Date of publication and mention
of the grant of the patent:
**06.03.2019 Bulletin 2019/10**

(21) Application number: **15194716.5**

(22) Date of filing: **16.11.2015**

(51) Int Cl.:
*B43K 29/10* (2006.01)  *G02B 19/00* (2006.01)
*F21L 4/00* (2006.01)  *F21V 5/04* (2006.01)
*F21V 9/14* (2006.01)  *F21V 13/02* (2006.01)
*G02B 27/20* (2006.01)  *G02B 27/28* (2006.01)
*G02B 27/09* (2006.01)  *G02B 27/30* (2006.01)
*G06F 3/0354* (2013.01)

(54) **AN APPARATUS LIGHT PEN AND ITS USE**

VORRICHTUNG FÜR EINEN LICHTSTIFT UND DESSEN VERWENDUNG

APPAREIL PHOTOSTYLE ET SON UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.05.2017 Bulletin 2017/20**

(73) Proprietor: **King Abdulaziz City for Science and
Technology
11442 Riyadh (SA)**

(72) Inventors:
• **AL-SAUD, Turki Saud Mohammed
11442 Riyadh (SA)**
• **ALTAMIMI, Rashid Mohammed
11442 Riyadh (SA)**
• **AGABEKOV, Vladimir Enokovich
220141 Minsk (BY)**
• **MURAVSKY, Alexander Anatolievich
220141 Minsk (BY)**
• **KAZAK, Nikolai Stanislavovich
220072 Minsk (BY)**

• **BELYI, Vladimir Nikolaevich
220072 Minsk (BY)**
• **KHILO, Nikolai Anatolievich
220072 Minsk (BY)**
• **MITSKOVETS, Anatoli Ivanovich
220072 Minsk (BY)**
• **KURILKINA, Svetlana Nikolaevna
220072 Minsk (BY)**
• **RYZHEVICH, Anatol Anatolievich
220072 Minsk (BY)**

(74) Representative: **Gulde & Partner
Patent- und Rechtsanwaltskanzlei mbB
Wallstraße 58/59
10179 Berlin (DE)**

(56) References cited:
US-A- 3 670 260        US-A- 6 099 185
US-A1- 2011 048 411    US-A1- 2011 075 440
US-A1- 2013 321 783    US-A1- 2014 176 514

**Description**

FIELD OF TECHNOLOGY

This disclosure relates generally to an apparatus, a light pen, which comprises a light emitting diode (LED). More particularly, it relates to generation of a certain form of radiation using the LED for forming graphical images on various surfaces.

BACKGROUND

At present there are many mechanical and electronic devices different in operation principle and aimed for the formation and recording of graphical images to various carriers.

Lead pencil is the most well-known and widely used. Writing lead of the pencil can more or less differ chemically from the graphite, have different color and softness. In most cases the image looks like a wear writing lead on the paper, which is mostly frail and moisture-nonresistant and hence short-lived carrier. Besides, graphite images can be mechanically blurred and effaced.

In every-day use for writing down the graphical information there are pens with one and more writing leads (usually of different colors) possessing a rolling writing unit on the tip. These instruments are aimed mostly for writing in paper.

Graphics tablets (pads) for entering graphic information are serially produced and applied. The information is recorded in digital form, but for recording process and its visualization and also for further reading the information from the carrier a program-compatible computer is needed.

Recently a laser electronic pen for entering and writing graphic information has been developed. This device possessing a lead with the ink can write on a usual paper, however, as in the previous case, it is intended for the entering of graphic information mostly in the digital form, so for reading it from the carrier a computer is needed.

Technically closest to the proposed light pen is the light source, consisting of a light emitting diode (LED), which generates the radiation in the form of axial and conical components, external collimating optical element in the form of a glass truncated conical lens and the objective in the form of a positive spherical lens mounted with the opportunity of its controllable moving along the optical axis of the device. The light source gives the opportunity to control the size of the light spot in the given plane, however it generates non-polarized radiation of one certain color (depending on LED model), and it is not a completely autonomous device, as for its operation a corresponding power supply is needed, which provides a certain current intensity in the LED. There is a need for a more sophisticated technology for autonomous writing tool that does not require electrical connections.

US 2014/0176514 A1 discloses a light pen capable of selectively emitting linearly polarized light in first polarization plane and a second polarization plane. US 2011/0075440 A1 discloses a light pen comprising an LED as a light source and two optical lens devices housed in a case. The light pen allows a beam area projected on an optical touch panel to be easily adjusted. US 6,099,185 A describes a multicolor light pen comprising a multicolor LED set-up and batteries contained in a housing. The multicolor LED set-up contains a plurality of chips capable of generating different color of light source, depending on the electrical contacting.

SUMMARY

Several embodiments for an apparatus and method of using for a light pen are disclosed. The instant disclosure incorporates a novel feature of producing linearly polarized light. In another embodiment, the linearly polarized light may produce beams of different colors, for example, red, blue and green. In one embodiment, the linearly polarized light having a specific intensity thus produced may be used for writing on a specific surface having a specific thickness. In another embodiment, the power supply to the light pen as an apparatus may be provided by a set of batteries and/or supplied using an electrical circuit. The electrical circuit can be used for recharging the batteries as well.

In one embodiment, a toggle for selecting a specific light emitting diode to produce a light beam, wherein the specific light emitting diode is at least one of a red, green and blue. In another embodiment, a polarization block consisting of a truncated cone shaped collimating optical element, a broad band polarization divider, a broadband semi-wave plate, shifting bi-prism and light beam coupler are disclosed.

In one embodiment, a set of projection lens of different radii are set serially one after another, wherein the set of projection lens is made of at least one of a two, three, four, five and six lenses. More specifically there are a set of four lenses that are being disclosed.

In one embodiment, a method to generate power to light up a light emitting diode. A user can then choose the light emitting diode to emit a specific type of a light beam for writing. In another embodiment, a method to generate an optical radiation using the light emitting diodes in the form of a non-polarized light. In another embodiment, non-polarized light that is non-homogeneous is collected and converted it to a homogeneous non-polarized light using a truncated cone shaped collimating optical element.

In one embodiment, the homogeneous non-polarized light is divided into a first beam and a second beam that are orthogonally linearly polarized beam to each using a broad band polarization divider; the first beam is passed through a broadband semi-wave plate to change the polarization plane to 90 degrees and form a polarized light; the second beam is passed through a prism to convert it into a polarized light; the divided first beam and second beam that is a total polarized light is collimated through a light beam coupler; and the total polarized light is focused using set of projection lens having a specific shape and specific curvature to produce a focused optical system that would be used for writing on polarized light sensitive surface. The radii of each lens in the set of projection lens are different.

In one embodiment, linearly polarized light might have a polarization degree of not less than 0.99. In another embodiment, the aperture for the light beam to exit is adjustable and the surface on which needs to be written has to be perpendicular to the light exiting aperture. In another embodiment, thickness of the surface on which the information may be written or etched or recorded is between 0 to 1 mm for all colors. In another embodiment, the intensity of the color or the light beam is not less than 1.5 W.

In one embodiment, the apparatus, the light pen, comprises of the following distinctive features: housing, enclosing several optical elements, an energy source, an aperture and an adjustable ring to select the choice of a light beam. In another embodiment, a housing encloses a demountable frame, a casing for joint fixation, positioning and protection of the device components; a power supply block based on standard electro-batteries (optionally accumulator), providing the energy autonomy for the device; and three different light emitting diodes, generating red, blue and green radiation. In one embodiment, a rotary barrel to switch on one of the diodes such as the red, green and blue color LED's. In another embodiment, a lens, truncated glass cone, a polarization divider, an optical rotational element and set of projection lenses to modify the radiation and focus the light beam to perform inscribing on a specific surface.

The apparatus and method of using the same disclosed herein may be implemented by any means for achieving various aspects, and may be executed using a set of instructions that, when executed by the light pen, cause the light pen to perform any of the operations disclosed herein. Other features will be apparent from the accompanying drawings and from the detailed description that follows.

BRIEF DESCRIPTION OF DRAWINGS

Example embodiments are illustrated by way of example and not limitation in the figures of the accompanying drawings, in which like references indicate similar elements and in which:

Fig. 1 is a detailed layout and an optical scheme of the light pen, in one embodiment.
Fig. 2 shows a set of optical elements for the light pen, in one embodiment.
Fig. 3 shows various parts being assembled in a particular order, in one embodiment.
Fig. 4 shows the outer view of the assembled light pen, in one embodiment.

Other features of the present embodiments will be apparent from the accompanying drawings and from the detailed description that follows.

DETAILED DESCRIPTION

An apparatus and method of using the apparatus relates to generation of a certain form of radiation using the LED for forming graphical images on various surfaces are disclosed. Although the present embodiments have been described with reference to specific example embodiments, it will be evident that various modifications and changes may be made to these embodiments. This disclosure is a useful model in the area of optics and electronics. The light pen can be used for the formation of graphical images and their recording to hard and floppy carriers, including firm and moisture-resistant ones, sensitive to the linearly-polarized light only, for example at manual marking of the unique products or signing the valuable personal documents. The terminology used in the priority document is slightly different and in this disclosure we have made it more uniform for clarity purposes. The figures and the nomenclature are the comparable.

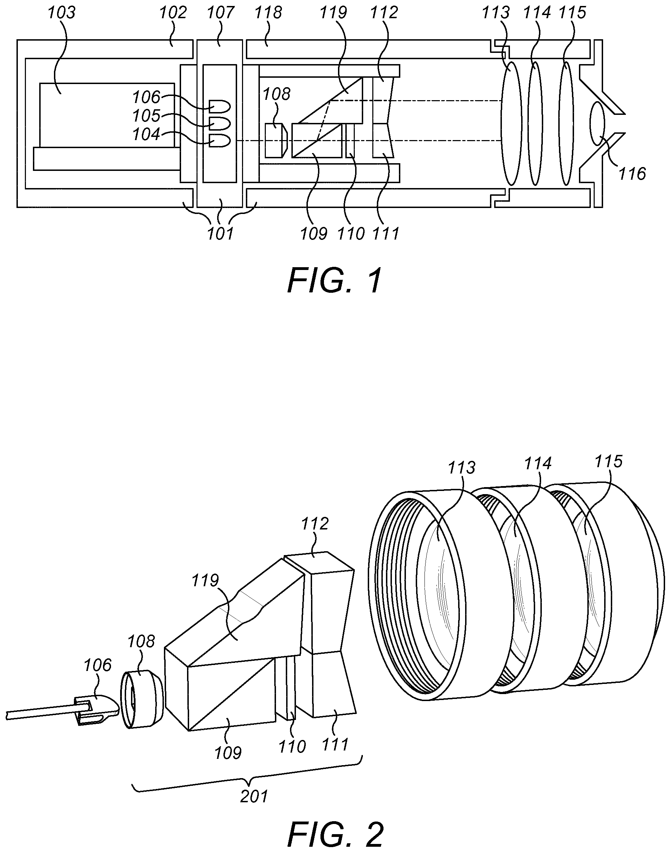

Fig. 1 discloses the light pen (the apparatus) contains a light emitting diode (LED) 104,105 and 106, which generates the radiation in the form of axial and conical components, a truncated cone shaped collimating optical element 108 in the form of a glass truncated conical lens to produce a light spot of a set size and in the set plane. The light pen also possess housing 118, demountable frame 102 and a casing for joint fixation 101 to position and protect the device components; a power supply block 103 to house standard electro-batteries (optionally accumulator), providing the energetic autonomy for the device; and three different light emitting diodes, generating red, blue and green radiation, which are established on a rotary barrel and toggle 107. A polarization divider 109 and 119 to divide a non-polarized light beam emitted from the LED into two orthogonally linearly polarized beams; as first light beams to pass through optical element 110 for the rotation of radiation polarization plane into 90 degrees and the second beam travelling through 119. The first and second beam then travel parallel to each other through the shifting bi-prism and light beam coupler 112 and 111 to travel along its optical axis within 5 mm for the reduction of the diameter of the output light spot in the plane of the end of the device up to 1 mm.

The task of the proposed useful model is to create a compact energetically autonomous source of linearly polarized light with a polarization degree of not less than 0.99, providing the formation of a light beam of any of three (red, blue or green) colors, with the opportunity of a controllable reduction of the illuminated zone diameter in a plane, which is perpendicular to the light propagation direction and goes through one of the ends of the device, up to 1 mm with any color radiation power of not less than 1.5 mW for the information record to a floppy or hard information carrier, which is sensitive to the linearly polarized light radiation only.

The proposed light pen contains a light emitting diode (LED) 105, 105, 106, which generates the radiation in the form of axial and conical components, external collimating optical element 108 in the form of a glass truncated conical lens (the border of a smaller cone base coincides with a local intensity minimum between the axial and conical radiation components and the diameter of a larger cone base provides the transition of about 90% of the energy of the conical component of radiation in the site of the lens establishment, angle $\theta$ between the conical component and the base is $\theta = \mathrm{arctg}[\sin(\alpha_{in})/[(n^2-\sin^2(\alpha_{in}))^{1/2}-1]$, where n is a refraction index of the lens material, $\alpha_{in}$ is a cone angle of the conical component incident to the truncated conical lens in the direction of its maximal intensity), and the objective for the formation of a light spot of the set size and in the set plane. The light pen possess the following distinctive features: it has a housing 118, containing a demountable frame 102 and a casing for joint fixation 101, positioning and protection of the device components; a power supply block 103 based on standard electro-batteries (optionally accumulator), providing the energetic autonomy of the device; and three different light emitting diodes 105, 105, 106, generating red, blue and green radiation, which are established on a rotary barrel 107 with the opportunity of alternating switching on one of the diodes with simultaneous light beam coupling from it to the optical axis of the device; after the collimating optical element 108 in the form of the truncated glass cone a polarization divider 109, 119 is established, which divides a non-polarized light beam into two orthogonally linearly polarized beams; on the way of one output light beams an optical element broadband semi-wave plate 110 for the rotation of radiation polarization plane into 90 degrees; then on the way of each beam optical elements 111, 112 for overlapping the images of imaginary sources of these beams on the optical axis of the objective are established; thus the objective is established with the opportunity of the controllable moving along its optical axis within 5 mm for the reduction of the diameter of the output light spot in the plane of the end of the device up to 1 mm.

The truncated cone shaped collimating optical element 108, the cut border of which coincides with a local intensity minimum between the axial and conical radiation components and the diameter of a cone base provides the transition of about 90% of the energy of the conical component of radiation through the cone base, thus the angle between the conical surface and the base is $\theta = \mathrm{arctg}[\sin(\alpha_{in}/[(n^2-\sin^2(\alpha_{in}))^{1/2}-1]$, where n is a refraction index of the lens material, $\alpha_{in}$ is a cone angle of the conical component in the direction of its maximal intensity; polarization divider 109; optical element 110 for the rotation of the polarization plane into 90 degrees; optical elements 111 and 112 for coupling the divided light beams along the optical axis of the device; a projection lens consisting of four positive spherical lenses 113, 114, 115, 116 established with the opportunity of the controllable moving along its optical axis within 5 mm. The number of lenses is variable (depends on the glass of lenses and its construction).

The device operates as follows. One of LED 104, 105, 106, connected to power supply 103 and adjusted by rotary barrel switch of radiation color 107 on the optical axis of external collimating optical element 108 (in Fig. 1 LED 104 is settled on the optical axis) generates optical radiation in the form of the axial and conical components. The axial component propagates through the plane surfaces of the basis and cut of the truncated conical lens 108 without any change of divergence. The conical component propagates through the basis and conical surface of lens 108, after this, in the result of refraction, its cone angle is substantially reduced going closer to zero. Both of components possess their own divergences and after conical lens 108 are partially overlapped, hence, after truncated conical lens 108 the light beam has Gaussian-like intensity distribution. After collimating optical element 108 the radiation comes to polarization divider 109, dividing a non-polarized light beam into two linearly polarized light beams in orthogonal planes. One of these beams propagates through optical element 110 for the rotation of the polarization plane into 90 degrees, after this, polarizations of both of beams become equal. Optical elements 111 and 112 shift the images of imaginary sources of both beams to the optical axis of the objective, after this they are focused by the objective consisting of lenses 113 - 116 in the vicinity of the plane going through the end of the light pen with the exit aperture in casing in the form of almost round spot. By means of moving of the objective along its optical axis within 5 mm, a focus spot having the diameter not more than 1 mm is adjusted precisely in the plane of the end with the exit aperture.

Possibility of realization of the proposed useful model can be proved by the following facts. At present a great number of light emitting diodes have been already designed and serially produced, many of them generate light radiation consisting of the axial and conical components. Intensity distributions of such two-component light beams generated by LED (for example models 365-1184-ND-X, 75-014-89; 75-036-42, 404-1102-ND) are known. The produced light pen prototype contains 3 LED: LED 365-1184-ND (with radiation wavelength of 465 nm and the divergence of near-axis component of the field of about 6°) is taken as a blue radiation source; LED 75-036-91 (with radiation wavelength of 575 nm and the divergence of 6°) is taken as a green radiation source; LED B5B-436-30 (with radiation wavelength of 660 nm and the divergence of 8°) is taken as a red radiation source. Now there is a technical opportunity and a technology for the production of the truncated conical lenses from optical materials. The external collimating optical element 108 for the reduction of the conicity angle of the conical component of LED radiation, which was produced for the realization of the proposed device, you can see in the photo in the optical details set for the light pen prototype in Fig. 2. It looks like a truncated refractive cone made of glass BK-7. Diameter of the element is 12 mm, height 9 mm, conical surface angle at the base is 23 degree. Calculation of angle $\theta$ at the cone base of lens 8 has been conducted in accordance with the formula connecting conicity angle $\alpha_{out}$ of the output beam with conicity angle $\alpha_{in}$ of the input beam of the lens:

$$\alpha_{out}(\theta) = \arcsin[n\sin(\theta-\alpha_1(\alpha_{in}))] - \theta \text{ , where } \alpha_1(\alpha_{in}) = \arcsin(\sin(\alpha_{in})/n). \tag{1}$$

Subject to the output beam is parallel to the optical axis, i.e. $\alpha_{out} = 0$, from (1) we obtain the equation:

$$\theta = \arcsin[n\sin(\theta-\alpha_1(\alpha_{in}))] \tag{2}$$

Solving of the equation (2) for angle $\theta$ gives $\theta = \text{arctg}[\sin(\alpha_{in})/[(n^2-\sin^2(\alpha_{in}))^{1/2}-1]$.

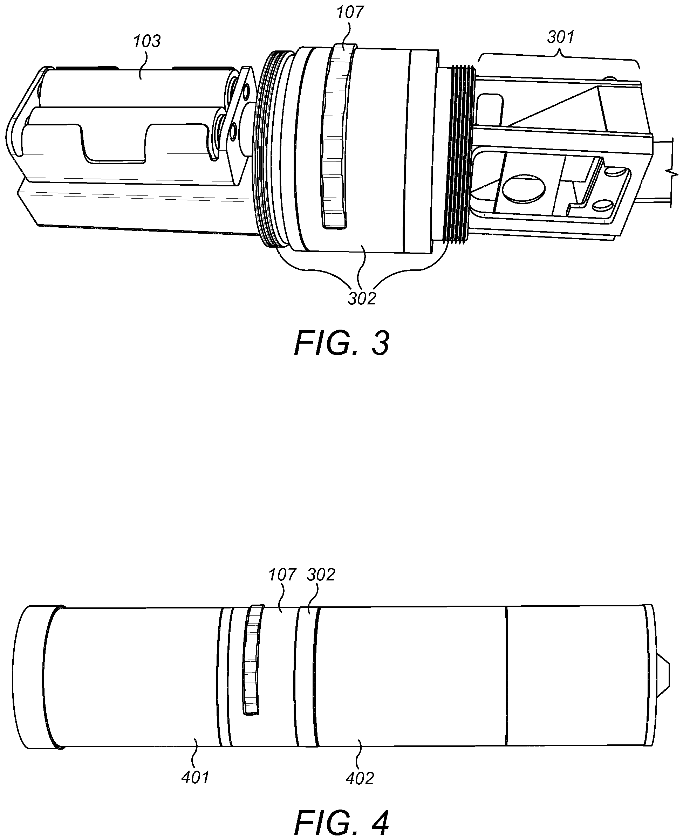

Light beams entering the cone within the range of angles of $\alpha_{in} = (6 \div 18)$ degrees, exit from the cone within the range of angles of $\alpha_{out} = (-6 \div 6)$ degrees. Thus the near-axis component of the incident radiation is also limited over the divergence angle within the range of $(-6 \div 6)$ degrees. It means that all radiation entering the cone within the range of $\alpha_{in} = (0 \div 18)$ has the divergence of not more than 6 degrees. About 95% of radiation energy of the used LED with two-component radiation structure occurs in this range of angles. It indicates the opportunity of high enough transformation efficiency. The main radiation losses here can be caused by the Fresnel refection on the edges of optical elements, for their reduction it is reasonable to apply a cone surface blooming on the wavelength of the used radiation. The diameter of the truncated cone base is chosen so that the largest part of LED radiation can propagate through it. The diameter of the cut is chosen so that the light beams incident under the boundary angle (dividing the axial and conical components and in the given case equal to 6 degrees) occur correspondingly on the border of the conical and plane parts of the surface. As the light intensity in this area has its minimum, so the diffraction losses are minimal also. Collimating element almost removes the two-component structure of the beam and reduces the intensity dip in its axis making the diametral intensity distribution in the cross section of the beam Gaussian-like. In the result of transformation the light beams becomes much more divergent, i.e. suitable for the subsequent change of its cross sizes by means of one or several spherical lenses 113, 114, 115, 116. Requirements to the polarization divider 109, 119 concerning the proposed model are the following: complete angular aperture on the divergence of the incident beam is more than 10 degrees; polarization degree of the output radiation is not less than 0,99; transmission band is in the range of ~ $450 \div 650$ nm; minimal distortions of the phase front of the output field. The polarization divider 109, 119 based on multi-layer photonic structure and using Brewster effect meets these requirements. Basic requirement to the material of layer of the multi-layer structure is the following: a high step of the refraction index, which can be compared to its average value. The variant of structure containing the layers of silicon dioxide $SiO_2$ with the refraction index of 1,45 and layers of $Nb_2O_5$ with the refraction index of 2,25 has been calculated. These materials possess a high threshold of light damage, and they are cheap and technological at the production of the photonic structures. A photonic structure consists of two substructures different in their period. The first of them contains 5 cells, each of them consists of the layers of $Nb_2O_5$ and $SiO_2$ having the thickness of 83 nm and 126 nm correspondingly. The second substructure contains 5 cells as the previous one, but the thicknesses of layers are 107 nm and 165 nm. These parameters are defined by means of optimization over the spectral width and angular aperture. In general, the photonic structure of the polarization divider 109, 119 operates in the mode of the reflection of s-polarization component of the incident field and the transmission of p-polarized component. The glass totally reflecting prism (included in the polarization divider 109, 119 produced according to this principle) provides the rotation of distribution of s-polarization component of the light radiation in the direction of the objective optical axis. A broadband semi-wave plate has been used in the produced prototype as optical element 110 rotating the polarization plane of p-polarizad component into 90 degrees. The radiation exiting from prism elements 111 and 112 is focused by the four-lens objective consisting in this very case of 4 positive spherical lenses 113-116, though the construction may be different. In the device construction there is an opportunity of moving the objective along the optical axis in 5 mm from the calculated position, providing more precise adjustment of the device. Due to the high radiation divergence the lenses are produced from a heavy crown glass TK21 and possess small radii of curvature: radii of curvature of the first lens are 136.14 mm and -109.9 mm; radii of curvature of the second lens are 41.3 mm and 124.74 mm; radii of curvature of the third lens are 21.38 mm and 28.256 mm. Light diameter of the first lens is 41.7 mm, it usually defines the cross size of the device in total. Measured focal distance of the objective is 27 mm. Summed light field in the focal plane of the objective looks like an almost round spot with visible diameter of 1 mm. Power supply of the produced prototype of the light pen is realized by means of the power supply block (see Fig. 3) based on 2 standard AA batteries, they may be both conventional and accumulator. This power supply block provides continuous autonomous operation of the light pen during about 70 hours (depending on the parameters and quality of the used batteries). In spite of the complex construction the prototype of the light pen has compact overall sizes: diameter is 52 mm, length is 246 mm, at this it provides high output capacity of linearly polarized radiation P in all wavelengths at working current 25 MA: $P(\lambda = 465$ nm$) = 3.2$ mWt, $P(\lambda = 575$ nm$) = 1.8$ mWt, $P(\lambda = 660$ nm$) = 2.4$ mWt.

Fig. 2 shows the details of the polarization block 201 consisting of a truncated cone shaped collimating optical element 108, a broad band polarization divider 109 and 119, a broadband semi-wave plate 110, shifting bi-prism and light beam coupler 111 and 112. The set of lenses 113, 114 and 115 are shown as well. The radii of these lenses are determined based on the need of the intensity of the light beam and focus area. They can easily be changed to different lenses having different radii. The Led 106 sits in front of the truncated cone shaped collimating optical element 108.

Fig. 3 shows a view of the light pen wherein the covers have been taken off and the battery 103, the toggle 107 and the optical unit 301 and the joining section of two functional units 302 are shown. This figure shows the modularity of the light pen. The dismantable covers allows the internal parts to be swapped. Specifically if the number of lenses need to be increased or decreased. Also the battery swaps can be done easily. The unit 302 that houses the LED light sources can also be removed and the LED can be replaced if necessary.

Fig. 4 shows a complete light pen that has two casings 401 and 402 that can be dismantled to replace battery and the joined at 302. The toggle 107 can be used for changing the selection of the LED lights from red, green and blue. The entire light pen may be used as a hand held device or mounted on automation device and/or robotic arm to write on polarized light sensitive surfaces. It may be used in security papers, immigration papers, counterfeit detection, authentication verification, health care documents, identification cards, immigration cards, licenses, passport, hard drives, computer components, articles of wear such as shoes etc., articles that need tracking such as packages, weapons, currency etc., classified documents etc. Once the material polarization sensitive material may be incorporated partially in documents or objects and the light pen can be used to write on it. The product when in use can be scrutinized under special light so it is visible only to the person who has the light source. Accordingly, the specification and drawings are to be regarded in an illustrative rather than a restrictive sense.

**Claims**

1. An apparatus for forming graphical images on a surface, comprising;
   a set of light emitting diodes (104, 105, 106) for emitting a non-homogeneous non-polarized light beam comprising axial and conical radiation components, wherein the set at least comprises one of a red, green and blue light emitting diode (104, 105, 106);
   a toggle (107) for selecting a specific light emitting diode (104, 105, 106) from the set of light emitting diodes (104, 105, 106);
   a polarization block (201) consisting of a truncated cone shaped collimating optical element (108) for collecting and converting the non-homogeneous non-polarized light beam to a homogeneous non-polarized light beam, a broad band polarization divider (109, 119) for dividing the homogeneous non-polarized light into a first and a second linearly polarized light beam that are orthogonally polarized to each, a broadband semi-wave plate (110) for rotating the polarization plane of the first beam by 90 degrees, a shifting bi-prism and light beam coupler (111, 112) for shifting the images of imaginary sources of both beams to the optical axis of an objective and for coupling the first and second beam along the optical axis;
   the objective comprising a set of projection lenses (113, 114, 115, 116) for focusing the polarized light to form an essentially round spot, wherein the set of projection lenses (113, 114, 115, 116) is made of at least one of a two, three, four, five and six lenses; and
   a power supply block (103) for supplying energy to the apparatus.

2. The apparatus of claim 1, wherein the set of projection lenses (113, 114, 115, 116) is made of four lenses.

3. The apparatus of claim 1, further comprising;
   a housing (102, 118) to enclose the toggle (107), the polarization block (201), the set of projection lenses (113, 114, 115, 116) and the power supply block (103); and
   a switch (107) for controlling the apparatus in on and off position.

4. The apparatus of claim 2, wherein a first side of the housing (102, 118) houses the power supply block (103) and a second side has a narrow aperture for the light beam to pass through.

5. The apparatus of claim 1, wherein the projection lens (113, 114, 115, 116) is made up of a specific shape and specific thickness.

6. The apparatus of claim 5, the specific shape is convex.

7. The apparatus of claim 1, wherein radii of curvature of a first projection lens are 136.14 mm and -109.9 mm, radii of curvature of a second projection lens are 41.3 mm and 124.74 mm; and radii of curvature of a third projection lens are 21.38 mm and 28.256 mm.

8. The apparatus of claim 1, wherein the polarization divider (109. 119) has a multi-layer photonic structure comprising layers of silicon dioxide ($SiO_2$) with the refraction index of 1.45 and layers of Niobium pentoxide ($Nb_2O_5$) with the refraction index of 2.25.

9. The apparatus of any one of claims 1 to 8, wherein the apparatus is a light pen.

10. A method for forming graphical images on a surface, comprising:

   generating a power to light up a light emitting diode (104, 105, 106);
   choosing the light emitting diode (104, 105, 106) to emit a specific type of a light beam;
   generating an optical radiation using the light emitting diode (104, 105, 106) in the form of non-homogeneous and non-polarized light comprising axial and conical radiation components;
   collecting the non-homogeneous and non-polarized light and converting it to a homogeneous non-polarized light using a truncated cone shaped collimating optical element (108);
   dividing the homogeneous non-polarized light into a first beam and a second linearly polarized beam that are orthogonally polarized to each using a broad band polarization divider (109);
   passing the first beam through a broadband semi-wave plate (110) to change the polarization plane by 90 degrees and form a polarized light;
   passing the second beam through a prism (119) to convert it into a polarized light;
   shifting the images of imaginary sources of both beams to the optical axis of an objective and coupling the divided first beam and second beam as a total polarized light along the optical axis through a shifting bi-prism and light beam coupler (111, 112); and
   focusing the total polarized light to form an essentially round spot on a polarized light-sensitive surface using the objective comprising a set of projection lenses (113, 114, 115, 116) having a specific shape and specific curvature .

11. The method of claim 10, wherein the set of projection lenses (113, 114, 115, 116) has a number of at least one of a two, three, four and five lenses.

12. The method of claim 11, wherein the set of projection lenses (113, 114, 115, 116) has a number of four lenses.

13. The method of claim 10, the specific shape of the projection lenses (113, 114, 115, 116) is convex.

14. The method of claim 10, wherein the set of projection lenses (113, 114, 115, 116) comprises four lenses, wherein the specific curvature is radii of curvature of a first lens are 136.14 mm and -109.9 mm, a second lens is 41.3 mm and 124.74 mm; and a third lens are 21.38 mm and 28.256 mm.

15. The method of claim 10 wherein the polarized light sensitive surface is silicon dioxide ($SiO_2$) with the refraction index of 1.45 and layers of Niobium pentoxide ($Nb_2O_5$) with the refraction index of 2.25.

**Patentansprüche**

1. Vorrichtung zum Bilden von grafischen Abbildungen auf einer Oberfläche, umfassend;
   einen Satz von lichtemittierenden Dioden (104, 105, 106) zum Emittieren eines nicht-homogenen, nicht-polarisierten Lichtstrahls, der axiale und konische Strahlungskomponenten umfasst, wobei der Satz mindestens eine aus einer roten, grünen und blauen lichtemittierenden Diode (104, 105, 106) umfasst;

einen Umschalter (107) zum Auswählen einer bestimmten lichtemittierenden Diode (104, 105, 106) aus dem Satz von lichtemittierenden Dioden (104, 105, 106);

einen Polarisationsblock (201), bestehend aus einem kegelstumpfförmigen kollimierenden optischen Element (108) zum Sammeln und Umwandeln des nicht-homogenen, nicht-polarisierten Lichtstrahls in einen homogenen, nicht-polarisierten Lichtstrahl, einem breitbandigen Polarisationsteiler (109, 119) zum Teilen des homogenen, nicht-polarisierten Lichts in einen ersten und einen zweiten linear polarisierten Lichtstrahl, die orthogonal zueinander polarisiert sind, eine breitbandige Halbwellenplatte (110) zum Drehen der Polarisationsebene des ersten Strahls um 90 Grad, ein verschiebendes Bi-Prisma und einen Lichtstrahlkoppler (111, 112) zum Verschieben der Abbildungen von imaginären Quellen beider Strahlen auf die optische Achse eines Objektivs und zum Koppeln des ersten und zweiten Strahls entlang der optischen Achse;

wobei das Objektiv einen Satz von Projektionslinsen (113, 114, 115, 116) zum Fokussieren des polarisierten Lichts umfasst, um einen im Wesentlichen runden Punkt zu bilden, wobei der Satz von Projektionslinsen (113, 114, 115, 116) aus mindestens einem von zwei, drei, vier, fünf und sechs Linsen gebildet ist; und

einen Stromversorgungsblock (103) zum Zuführen von Energie zu der Vorrichtung.

2. Vorrichtung nach Anspruch 1, wobei der Satz von Projektionslinsen (113, 114, 115, 116) aus vier Linsen gebildet ist.

3. Vorrichtung nach Anspruch 1, ferner umfassend;

ein Gehäuse (102, 118), um den Umschalter (107), den Polarisationsblock (201), den Satz von Projektionslinsen (113, 114, 115, 116) und den Stromversorgungsblock (103) einzuschließen; und

einen Schalter (107) zum Steuern der Vorrichtung in Ein- und Aus-Stellung.

4. Vorrichtung nach Anspruch 2, wobei eine erste Seite des Gehäuses (102, 118) den Stromversorgungsblock (103) aufnimmt und eine zweite Seite eine schmale Öffnung aufweist, die dem Hindurchtreten des Lichtstrahls dient.

5. Vorrichtung nach Anspruch 1, wobei die Projektionslinse (113, 114, 115, 116) eine bestimmte Form und eine bestimmte Dicke aufweist.

6. Vorrichtung nach Anspruch 5, wobei die bestimmte Form konvex ist.

7. Vorrichtung nach Anspruch 1, wobei Krümmungsradien einer ersten Projektionslinse 136,14 mm und -109,9 mm betragen, Krümmungsradien einer zweiten Projektionslinse 41,3 mm und 124,74 mm betragen; und Krümmungsradien einer dritten Projektionslinse 21,38 mm und 28,256 mm betragen.

8. Vorrichtung nach Anspruch 1, wobei der Polarisationsteiler (109, 119) eine mehrschichtige photonische Struktur aufweist, die Schichten aus Siliciumdioxid (Si02) mit dem Brechungsindex von 1,45 und Schichten aus Niobpentoxid ($Nb_2O_5$) mit dem Brechungsindex von 2,25 umfasst.

9. Vorrichtung nach einem der Ansprüche 1 bis 8, wobei die Vorrichtung ein Lichtstift ist.

10. Verfahren zum Bilden von grafischen Abbildungen auf einer Oberfläche, umfassend:

Erzeugen einer Leistung, um eine lichtemittierende Diode (104, 105, 106) zu aktivieren;

Auswählen der lichtemittierenden Diode (104, 105, 106), um einen bestimmten Typ eines Lichtstrahls zu emittieren;

Erzeugen einer optischen Strahlung unter Verwendung der lichtemittierenden Diode (104, 105, 106) in Form von nicht-homogenem und nicht-polarisiertem Licht mit axialen und konischen Strahlungskomponenten;

Sammeln des nicht-homogenen und nicht-polarisierten Lichts und Umwandeln desselben in ein homogenes, nicht-polarisiertes Licht unter Verwendung eines kegelstumpfförmigen kollimierenden optischen Elements (108);

Teilen des homogenen, nicht-polarisierten Lichts unter Verwendung eines breitbandigen Polarisationsteilers (109) in einen ersten Strahl und einen zweiten linear polarisierten Strahl, die orthogonal zueinander polarisiert sind;

Leiten des ersten Strahls durch eine breitbandige Halbwellenplatte (110), um die Polarisationsebene um 90 Grad zu ändern und ein polarisiertes Licht zu bilden;

Leiten des zweiten Strahls durch ein Prisma (119), um ihn in ein polarisiertes Licht umzuwandeln;

Verschieben der Abbildungen von imaginären Quellen beider Strahlen auf die optische Achse eines Objektivs und Koppeln des geteilten ersten und zweiten Strahls als insgesamt polarisiertes Licht entlang der optischen Achse durch ein verschiebendes Bi-Prisma und einen Lichtstrahlkoppler (111, 112); und
Fokussieren des gesamten polarisierten Lichts, um einen im Wesentlichen runden Punkt auf einer polarisierten lichtempfindlichen Oberfläche zu bilden, mittels eines Objektivs, das einen Satz von Projektionslinsen (113, 114, 115, 116) mit einer bestimmten Form und einer bestimmten Krümmung umfasst.

11. Verfahren nach Anspruch 10, wobei der Satz von Projektionslinsen (113, 114, 115, 116) eine Anzahl von mindestens einem von zwei, drei, vier und fünf Linsen aufweist.

12. Verfahren nach Anspruch 11, wobei der Satz von Projektionslinsen (113, 114, 115, 116) eine Anzahl von vier Linsen aufweist.

13. Verfahren nach Anspruch 10, wobei die bestimmte Form der Projektionslinsen (113, 114, 115, 116) konvex ist.

14. Verfahren nach Anspruch 10, wobei der Satz von Projektionslinsen (113, 114, 115, 116) vier Linsen umfasst, wobei die bestimmte Krümmung ist, dass Krümmungsradien einer ersten Linse 136,14 mm und -109,9 mm, einer zweiten Linse 41,3 mm und 124,74 mm; und einer dritten Linse 21,38 mm und 28,256 mm betragen.

15. Verfahren nach Anspruch 10, wobei es sich bei der polarisierten lichtempfindlichen Oberfläche um Siliciumdioxid ($SiO_2$) mit dem Brechungsindex von 1,45 und Schichten aus Niobpentoxid ($Nb_2O_5$) mit dem Brechungsindex von 2,25 handelt.

**Revendications**

1. Appareil de formation des images graphiques sur une surface, comprenant :

   un ensemble de diodes électroluminescentes (104, 105, 106), destiné à l'émission d'un faisceau lumineux non polarisé non homogène, comprenant des composants de rayonnement axiaux et coniques, ledit ensemble comprenant au moins une parmi des diodes électroluminescentes (104, 105, 106) rouge, verte et bleue ;
   une bascule (107), destinée à sélectionner une diode électroluminescente (104, 105, 106) spécifique de l'ensemble de diodes électroluminescentes (104, 105, 106) ;
   un bloc de polarisation (201), constitué d'un élément optique de collimation (108) en forme de cône tronqué, destiné à collecter et à convertir le faisceau lumineux non polarisé non homogène en un faisceau lumineux homogène non polarisé ; un diviseur de polarisation à large bande (109, 119), destiné à diviser la lumière non polarisée homogène en un premier et un deuxième faisceaux lumineux polarisés linéairement, lesquels sont polarisés orthogonalement l'un par rapport à l'autre ; une plaque semi-ondulée à large bande (110), destinée à faire tourner le plan de polarisation du premier faisceau de 90 degrés ; un coupleur de prisme double et de faisceau lumineux (111, 112) de décalage, destiné à décaler les images de sources imaginaires des deux faisceaux vers l'axe optique d'un objectif et à coupler les premier et deuxième faisceaux le long de l'axe optique ; l'objectif comprenant un ensemble de lentilles de projection (113, 114, 115, 116), destiné à focaliser la lumière polarisée afin de former un point essentiellement rond, l'ensemble de lentilles de projection (113, 114, 115, 116) étant constitué d'au moins une des deux, trois, quatre, cinq et six lentilles ;
   et un bloc d'alimentation (103), destiné à fournir de l'énergie à l'appareil.

2. Appareil selon la revendication 1, l'ensemble de lentilles de projection (113, 114, 115, 116) étant constitué de quatre lentilles.

3. Appareil selon la revendication 1, comprenant en outre :

   un boîtier (102, 118), destiné à enfermer la bascule (107), le bloc de polarisation (201), l'ensemble de lentilles de projection (113, 114, 115, 116) et le bloc d'alimentation (103) ;
   et un commutateur (107), destiné à commander l'appareil en position marche et arrêt.

4. Appareil selon la revendication 2, un premier côté du boîtier (102, 118) logeant le bloc d'alimentation (103) et un deuxième côté comportant une ouverture étroite destinée au passage du faisceau lumineux.

5. Appareil selon la revendication 1, la lentille de projection (113, 114, 115, 116) étant constituée d'une forme spécifique et d'une épaisseur spécifique.

6. Appareil selon la revendication 5, la forme spécifique est convexe.

7. Appareil selon la revendication 1, les rayons de courbure d'une première lentille de projection étant de 136,14 mm et de -109,9 mm ; les rayons de courbure d'une deuxième lentille de projection étant de 41,3 mm et de 124,74 mm ; et les rayons de courbure d'une troisième lentille de projection étant de 21,38 mm et de 28,256 mm.

8. Appareil selon la revendication 1, le diviseur de polarisation (109, 119) ayant une structure photonique multicouche comprenant des couches de dioxyde de silicium ($SiO_2$) avec un indice de réfraction de 1,45 et des couches de pentoxyde de niobium ($Nb_2O_5$) avec un indice de réfraction de 2,25.

9. Appareil selon l'une quelconque des revendications 1 à 8, l'appareil étant un crayon lumineux.

10. Procédé de formation des images graphiques sur une surface, comprenant :

générer un courant pour éclairer une diode électroluminescente (104, 105, 106) ;
choisir la diode électroluminescente (104, 105, 106) pour émettre un type spécifique de faisceau lumineux ;
générer un rayonnement optique à l'aide de la diode électroluminescente (104, 105, 106) sous la forme de lumière non homogène et non polarisée comprenant des composants de rayonnement axiaux et coniques ;
collecter la lumière non homogène et non polarisée et à convertir ladite lumière en une lumière homogène non polarisée à l'aide d'un élément optique de collimation (108) en forme de cône tronqué ;
diviser la lumière non polarisée homogène en un premier faisceau et en un deuxième faisceau polarisés linéairement, lesquels sont polarisés orthogonalement l'un par rapport à l'autre à l'aide d'un diviseur de polarisation à large bande (109) ;
faire passer le premier faisceau à travers une plaque semi-ondulée à large bande (110) pour modifier le plan de polarisation de 90 degrés et pour former une lumière polarisée ;
faire passer le deuxième faisceau à travers un prisme (119) pour convertir ledit deuxième faisceau en une lumière polarisée ;
décaler les images des sources imaginaires des deux faisceaux vers l'axe optique d'un objectif et à coupler les premier et deuxième faisceaux divisés en tant que lumière polarisée totale le long de l'axe optique par l'intermédiaire d'un coupleur de prisme double et de faisceau lumineux (111, 112) ;
et focaliser la lumière polarisée totale pour former un point essentiellement rond sur une surface sensible à la lumière polarisée à l'aide de l'objectif comprenant un ensemble de lentilles de projection (113, 114, 115, 116) comportant une forme spécifique et une courbure spécifique.

11. Procédé selon la revendication 10, l'ensemble de lentilles de projection (113, 114, 115, 116) ayant un nombre d'au moins une des deux, trois, quatre et cinq lentilles.

12. Procédé selon la revendication 11, l'ensemble de lentilles de projection (113, 114, 115, 116) ayant un nombre de quatre lentilles.

13. Procédé selon la revendication 10, la forme spécifique de la lentille de projection (113, 114, 115, 116) étant convexe.

14. Procédé selon la revendication 10, l'ensemble de lentilles de projection (113, 114, 115, 116) comprenant quatre lentilles, la courbure spécifique correspondant aux rayons de courbure, les rayons de courbure d'une première lentille étant de 136,14 mm et de -109,9 mm ; d'une deuxième lentille de 41,3 mm et de 124,74 mm ; et d'une troisième lentille de 21,38 mm et de 28,25 mm.

15. Procédé selon la revendication 10, la surface sensible à la lumière polarisée étant du dioxyde de silicium ($SiO_2$) avec un indice de réfraction de 1,45 et des couches de pentoxyde de niobium ($Nb_2O_5$) avec un indice de réfraction de 2,25.

FIG. 1

FIG. 2

FIG. 3

FIG. 4

**EP 3 168 054 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140176514 A1
- US 20110075440 A1
- US 6099185 A